Europäisches Patentamt

European Patent Office

Office européen des brevets

(11) Publication number: **0 196 598**
**B1**

## (12) EUROPEAN PATENT SPECIFICATION

(45) Date of publication of patent specification: **06.12.89**  (51) Int. Cl.⁴: **G 21 C 3/34**

(21) Application number: **86104068.1**

(22) Date of filing: **25.03.86**

(54) Spacer grid of a nuclear reactor fuel assembly.

(30) Priority: **02.04.85 US 719107**

(43) Date of publication of application:
**08.10.86 Bulletin 86/41**

(45) Publication of the grant of the patent:
**06.12.89 Bulletin 89/49**

(84) Designated Contracting States:
**BE DE FR GB IT SE**

(56) References cited:
**FR-A-1 531 996**
**US-A-3 944 467**
**US-E- 30 247**

(73) Proprietor: **WESTINGHOUSE ELECTRIC CORPORATION**
**Westinghouse Building Gateway Center**
**Pittsburgh Pennsylvania 15222 (US)**

(72) Inventor: **Weiland, Lynne Elaine**
**7816 Teague Road**
**Columbia South Carolina 29209 (US)**
Inventor: **Parks, Beryl Hugh**
**129 Duchess Trail**
**Lexington South Carolina 29072 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The invention relates generally to an improved nuclear reactor fuel assembly spacer grid for spacing and cradling fuel rods in a nuclear fuel assembly.

In a nuclear fuel assembly, spacer grid assemblies are used to precisely maintain the spacing between the fuel rods in a nuclear reactor core, to prevent rod vibration, and to provide lateral support for the fuel rods. Conventional spacer grid assembly designs include a multiplicity of metal grid straps, interlocked into an egg-crate configuration designed to form cells through which fuel rods (standard cells) and control rod guide thimbles (thimble cells) pass. Slots are often utilized to effect the interlocking engagement between grid straps. Each standard cell provides support for one fuel rod at a given axial location through the use of relatively resilient grid springs and relatively rigid protuberances (dimples) formed in or attached to the metal grid straps. A peripheral strap may be used to enclose the interlocked grid straps in order to impart strength and rigidity to the fuel assembly and to provide grid spring and dimple locations for the peripheral cells. In order to minimize the lateral displacement of fuel rods during operation and to improve the fuel characteristics of a fuel assembly, a number of such spacer grid assemblies may be spaced along the fuel assembly. These grids are generally held in place by attaching them to the control rod guide thimbles through well-known bulging techniques or the like.

Such spacer grid assemblies are disclosed in U.S. Patent Nos. 3,389,056; 3,713,971; 3,944,467; 4,224,107, and Re. US—E 30, 247, for example.

During operation in a nuclear reactor, the grid springs and dimples are exposed to intensive radiation which may cause the grid springs to lose enough of their resilience to eventually permit the fuel rods to vibrate and chatter against the dimples. The result may be fretting of the fuel rod cladding. In a typical fuel rod, the cladding comprises a metal tube that contains nuclear fuel pellets. As used herein, the term "fretting" means a rubbing action between the fuel rod cladding and the grid springs and dimples. If severe enough, fretting is believed to result in fuel rod failure. In a nuclear fuel assembly, fretting may be caused by rod vibration induced by coolant and/or moderator fluid flow in the reactor core and possibly by forces set up during shipping and during loading of the fuel rod. Furthermore, fuel rods generally are long (several meters) slender cylinders which, when inserted into conventional spacer grid assemblies during fuel loading, typically have their outer peripheral surfaces resting flat or raised surfaces of dimples and grid springs in a manner resulting in a point or line contact between the fuel rod surface and the springs and dimples. When rods are loaded into such conventional spacer grid assemblies, scratches known as loading scratches are a common problem. It is believed that these scratches are caused, during the insertion of the fuel rods into the spacer grid assemblies, by sharp edges on the dimples and springs scraping along the fuel rod claddings.

Some conventional spacer grids contribute to an additional problem in that the fuel rod springs and dimples may not accurately position the fuel rod at the center of a standard cell. Deviations from that center position can result in adverse nuclear characteristics in the fuel assembly as well as hydraulic flow maldistribution and mechanical damage, such as bent dimples and grid springs.

It is the principal object of the invention to alleviate these problems, and the invention accordingly resides in a nuclear fuel assembly spacer grid as characterized in claim 1.

It will be appreciated that the dimples and springs which, instead of making point contact with the fuel rods, have fuel-rod cradling surfaces will present to fuel rods larger bearing surfaces which are capable of distributing vibrational or shock-induced forces over larger areas and are less likely to cause scratching or fretting of fuel rod cladding.

The fuel rods are substantially cylindrical, and the contoured cradling surface of each dimple and each spring has a radius of curvature at least equal to that of the peripheral surface of the fuel rod. Each dimple and each spring is an elongate member which arches from the associated grid strap inwards of the associated cell and has the cradling surface formed on a raised central portion thereof, the elongate member preferably being provided, along its longitudinal edges, with flanges angled toward the plane of the associated grid strap. In the preferred embodiment of the invention still to be described, the elongate and arched dimples extend transverse, and the elongate and arched springs extend substantially parallel, with respect to the longitudinal axes of the respective grid cells, the springs preferably having longitudinal ribs formed on end or base portions thereof extending from the opposite ends of their raised central portions.

The preferred embodiment of the invention will now be described, by way of example only, with reference to the accompanying drawings, in which:—

Figure 1 is an elevational view of a conventional fuel assembly including spacer grids which embody the invention;

Figure 2 is an isometric view, with parts shown broken away, of a spacer grid embodying the invention;

Figure 3 is an elevational view of a spring of the spacer grid;

Figure 4 is a sectional view taken along line A—A of Fig. 3;

Figure 5 is a sectional view taken along line B—B or line C—C of Figure 4;

Figure 6 is a sectional view taken along line D—D of Figure 4;

Figure 7 is an elevational view of a dimple of the spacer grid embodying the invention;

Figure 8 is a sectional view taken along line E—E of Figure 7;

Figure 9 is a sectional view taken along line F—F of Figure 8;

Figure 10 is a sectional view taken along line G—G of Figure 8; and

Figure 11 shows a modification of the dimple configuration of Figure 9.

In the following description, terms such as "forward", "rearward", "left", "right", "downwardly", and the like, are employed as words of convenience not to be construed as limiting terms.

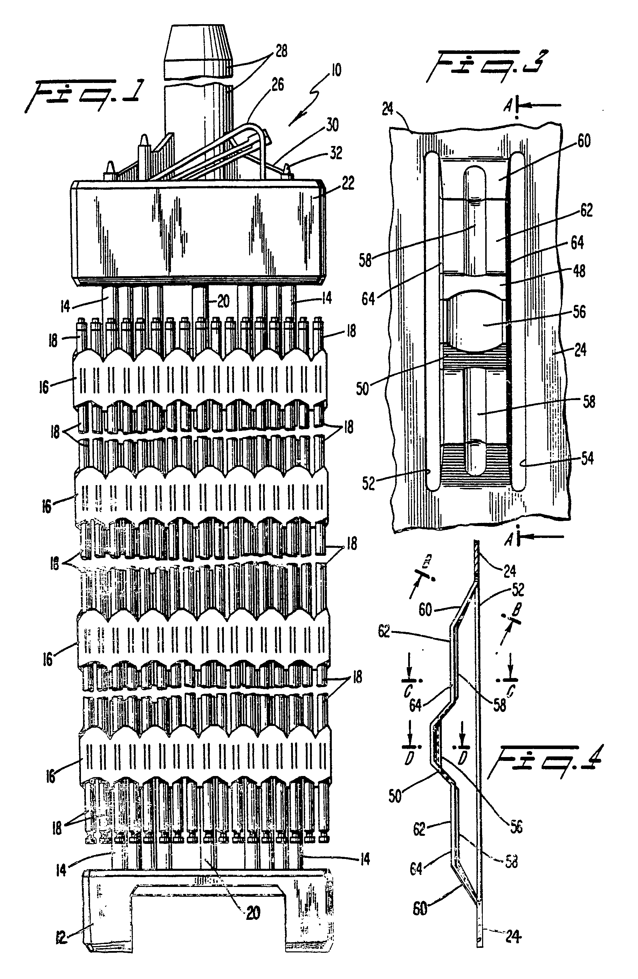

Referring now to the drawings and particularly to Figure 1, the fuel assembly shown therein and generally designated with reference numeral 10 comprises a lower end structure or bottom nozzle 12 for supporting the assembly on the lower core plate (not shown) in the core region of a reactor (not shown), control rod guide tubes or thimbles 14 extending upwards from the bottom nozzle 12, transverse spacer grids 16 laterally supporting an organized array of fuel rods 18, an instrumentation tube 20, and an upper end structure or top nozzle 22 attached to the upper ends of the guide thimbles 14 to form an integral assembly capable of being conventionally handled without damage to the assembly components. The bottom and top nozzles 12, 22 are of conventional designs, each including an adapter plate with openings (not shown) for the flow of a liquid coolant, such as water, therethrough, all as well known in the art.

The top nozzle 22 includes upright sidewalls which extend from its adapter plate and have an upper flange (not shown) to which there are suitably clamped leaf springs 26 (only one is shown) which cooperate with the upper core plate (not shown) to prevent hydraulic lifting of the fuel assembly 10, caused by the upward coolant flow, while allowing for changes in the fuel assembly length due to core-induced thermal expansion and the like. Disposed within the enclosure defined by the sidewalls of the top nozzle 22 is a conventional rod-cluster control assembly 28 having radially extending flukes 30 connected to the upper ends of control rods 32 for vertically moving the control rods in the control-rod guide thimbles 14, as well known in the art.

When assembling the fuel assembly 10, the spacer grids 16 are attached to the guide thimbles 14 at predetermined axially spaced locations, the fuel rods 18 are inserted through the respective cells formed by the interlocked grid straps, the lower nozzle 12 is suitably attached to the lower ends of the guide thimbles 14, and the top nozzle 22 is attached to the upper ends of the guide thimbles 14. For a more detailed description of the conventional parts of the fuel assembly 10, reference may be made to US—A—4,061,536.

Before describing the spacer grid structure embodying the invention, it is noted that spacer grids as such are well known in the art and are used mainly to maintain a precise spacing between fuel rods, and to prevent fuel rods from vibrating. Conventional spacer grids, such as those shown and described in U.S. Patent Nos. 3,379,619 and 4,061,536, are formed of straps interfitted into an egg-crate configuration providing cells for accepting the fuel rods. Each of the cells supports the fuel rod therein by means of spring fingers and dimples which frictionally engage the fuel rod typically at six points therein. The spacer grids may include vanes for providing coolant flow mixing, as likewise known in the art.

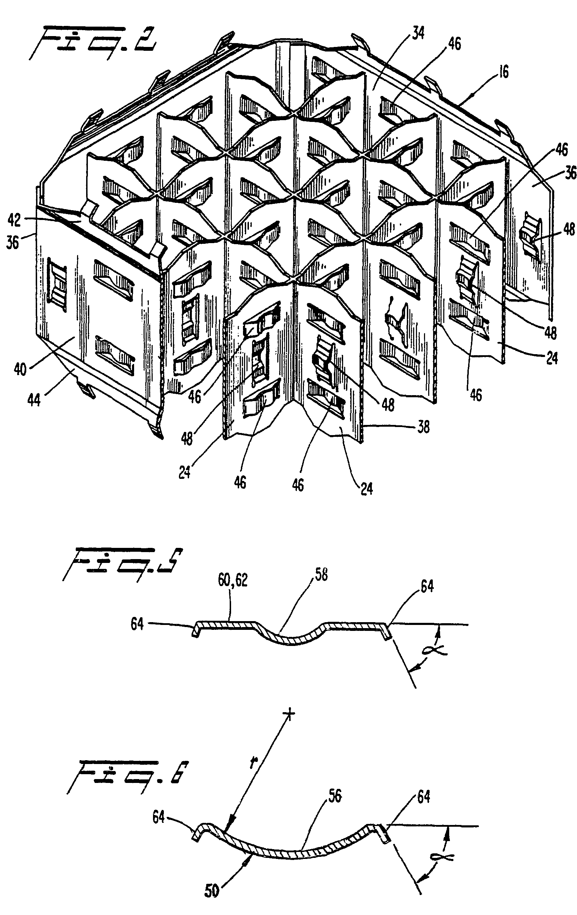

Referring now to Figure 2 of the drawings, there is shown part of a spacer grid embodying the invention. Similar to conventional spacer grids, the grid 16 is formed of straps 24 interleaved in egg-crate-like fashion to form cells 34 for the respective fuel rods 18 to extend therethrough. The spacer grid 16 also includes outer or peripheral straps 36 which are interconnected at their ends and, encircling the egg-crate-like structure of inner straps 24, have the ends of the latter connected thereto. As seen from Figure 2, each outer strap 36 has a main portion 40 and may have upper and lower resilient border portions 42 and 44, respectively. Preferably, the border portions 42 and 44 are formed integral with the main portion 40, and project outward from the planes of the associated portions 40 in order to cushion the enclosed fuel rods from shocks on shipping containers or the like used to transport fuel assemblies to reactors. The border portions 42 and 44 may be fashioned to form mixing vanes for creating turbulence and promoting mixing of the coolant flow through the fuel assembly. The outer straps 36 preferably are made of a material having a low neutron capture cross-section, such as zirconium or a zirconium alloy, and are joined together and to the inner grid straps by welding.

Projecting into each cell 34 of the spacer grid 16 as shown are two pairs of relatively rigid dimples 46 and two grid springs 48. The two pairs of dimples 46 are formed on the respective strap portions bordering the cell 34 on two adjoining sides thereof, and the springs 48 are formed on the respective strap portions bordering the cell on its remaining sides, i.e., the sides opposite from the strap portions carrying the dimples, the dimples 46 on each strap portion being spaced apart and aligned with each other in the longitudinal direction of the cell which coincides with the longitudinal direction of the particular fuel rod when extending therethrough. With this arrangement, the spring 48 in each grid cell will engage the fuel rod therein and bias it against the relatively rigid dimples 46 opposite the respective springs.

The dimples 46 and the grid springs 48 are elongate and generally trapezoidal in shape, the dimples 46 extending transverse with respect to the longitudinal axes of the respective grid cells, and the springs 48 extending substantially parallel to the grid-cell longitudinal axes. In the embodiment illustrated, the dimples 46 and grid springs are integral parts of the respective grid straps 24, each of them being lanced along its longitudinal edges from the associated strap 24 and being arched from the plane thereof inwardly of the associated grid cell.

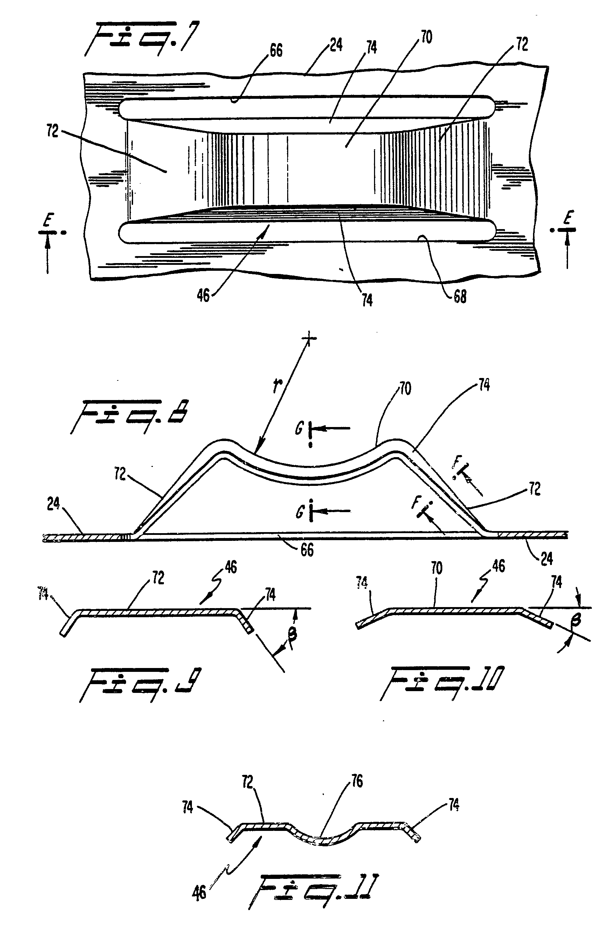

Turning now to Figures 3 to 6, the fuel-rod cradling grid springs 48 constructed in accordance with the invention will now be described in detail. As indicated above, the springs 48 as shown in the preferred embodiment are integral parts of the respective grid straps 24, each of them having been lanced from the associated strap 24 by punching slots 52 and 54 along the longitudinal edges of the spring 48. Each of the springs 48 has a raised portion 50 contoured to cradle the associated fuel rod and to present to the latter a relatively large bearing surface which is capable of distributing vibrational and impact-induced forces over a larger surface area of the rod, and which, in addition, minimizes the chance of the fuel rod cladding being scratched during loading or unloading operations. In order to provide a large bearing surface, the raised portion 50 of each grid spring 48 has an arcuate surface 56 which is curved so as to approximately follow the surface contour of the generally cylindrical fuel rods, and in order to lessen any fretting tendency still further, each spring 48 preferably is provided with longitudinal ribs 58 formed along the transverse center of base portions 60, 62 extending from the opposite ends of the raised central portion 50 of the spring. The ribs 58 also add stiffness to the grid spring 48. Each spring 48 may be further stiffened by providing it, along the longitudinal edges thereof, with flanges 64 angled towards the plane of the strap 24 from which the spring is projecting. As seen best from Figure 5, the angle α formed by each flange with respect to the major face of the grid spring may be up to 90 degrees and preferably is in the range of from 30 to 60 degrees.

Referring now to Figures 7 to 10, the fuel-rod cradling dimples 46 will be described in detail. As the springs 48, the dimples 46 preferably are strips of strap material lanced from the respective straps 24 by punching slots 66 and 68 into it to form the longitudinal edges of the respective dimples. As best seen from Figure 8, each dimple 46, like each grid spring 48, is formed generally as an arch having a center portion 70 and base portions 72 extending from the opposite ends of the center portion to the grid strap 24. Since, in the illustrated embodiment, the dimples 46 are open in the coolant-flow direction in that they extend transverse with respect to the longitudinal axes of the grid cells, the center portion 70 of each dimple is curved in an arc extending between the base portions 72 so as to cradle the generally cylindrical fuel rod passing through the associated grid cell. Preferably, the radius of curvature (r) of the arc formed in each grid spring (Figure 6) and each dimple (Figure 8) is slightly greater than the radius of curvature of the outside diameter of the fuel rod to be supported, in order to cradle the fuel rod while allowing for small deviations in the location of the grid springs and dimples in the spacer grid assembly. At any rate, said radius r must be at least equal to the radius of curvature of the fuel rod to be supported when the fuel rod is in its expanded, i.e., heated condition.

Since the fuel rods are inserted in a direction parallel to the face of each dimple 46, it is desirable to roll down at least the edge of the dimple which is facing opposite to the direction of fuel rod insertion, thereby to form a ramp which will prevent the fuel rod cladding from being scratched. As seen best from Figures 9 and 10, the rolled down or ramp portion comprises a flange 74 which is angled toward the plane of the grid strap 24 from which the respective dimple is projecting and is disposed at an angle β, with respect to the arch, to form a generally smooth ramp onto the base portions 72 and center portion 70. The angle β may vary up to 90 degrees and preferably is in the range of between 30 to 60 degrees. The flange or flanges 74 will serve to stiffen the dimple as well as enable loading of fuel rods without scratching.

As shown in Figure 11, the base portions 72 of each dimple may also be provided with stiffening ribs 76.

During fabrication of a fuel assembly or operation in a reactor, a fuel rod could begin to deviate from its nominal center position aligned with the axis of the grid cell. The fuel rod cradle spacer grid design according to the present invention requires a fuel rod to "ride up" to a higher position on the dimple or spring in order to deviate from this nominal position. This riding-up movement tends to force a deviating fuel rod back into the "valley" of the cradle, thereby reducing any tendency toward large deviations from the nominal center position which could otherwise bend dimples and springs and alter the nuclear, thermal, and hydraulic characteristics of the fuel assembly.

During operation, the cradle grid spring and dimple design of the present invention also tend to maintain the fuel rods centered in the grid cells. This is particularly important after radiation begins to relax the force exerted on the fuel rods by the grid springs. In this regard, the cradle design tends to maintain a more uniform coolant flow distribution about the fuel rods. If, during operation, a fuel rod experiences "lift off" from a grid spring or dimple, generally not more than a few hundredths of a millimeter, the flow of coolant into and out of the cavity formed between the lifted-off fuel rod and the spring or dimple surface is more restricted with the cradle design of the invention than with the conventional flat design so that there is less of a tendency to increase the hydraulic lift on the fuel rod. Indeed, the more confined cavity resulting upon fuel rod lift-off by virtue of the cradle design tends to reduce the frequency of flow-induced fuel rod vibration and thereby reduces any tendency toward fretting of the fuel cladding.

## Claims

1. A nuclear fuel rod spacer grid for laterally supporting the substantially parallel spaced and substantially cylindrical fuel rods in a nuclear fuel assembly and comprising a plurality of straps interleaved in an egg-crate-like manner to define fuel-rod receiving cells each of which is bounded by portions of said straps having formed thereon dimples and, opposite thereto, springs biased a fuel rod extending therethrough against the dimples, each of said dimples (46) and each of said springs (48) having a surface (70; 56) which bears against the peripheral surface of the fuel rod (18), characterized in that said surface (70; 56) of each of said dimples and each of said springs is substantially part-cylindrical and contoured so as to cradle the fuel rod.

2. A spacer grid according to claim 1, characterized in that the contoured surface (56; 70) of each dimple (46) and each spring (48) is curved having a radius of curvature at least equal to the radius of curvature of the peripheral surface of the respective fuel rod.

3. A spacer grid according to claim 1 or 2, characterized in that each of said springs (48) and each of said dimples (46) is an elongate member arching from the associated strap (24) inwardly of the associated cell (34) and having a raised central portion with said contoured surface (56; 70) formed thereon.

4. A spacer grid according to claim 3, characterized in that each spring (48) extends substantially parallel to the longitudinal axis of the associated cell (34) and includes base portions (60, 62) which extend from opposite ends of said raised central portion of the spring and each of which has a longitudinal rib (58) formed thereon.

5. A spacer grid according to claim 3 or 4, characterized in that each spring (48) has flanges (64) formed along the longitudinal edges thereof and angled toward the plane of the associated strap (24).

6. A spacer grid according to claim 3, 4 or 5, characterized in that each of said dimples (46) has flanges (74) formed along the longitudinal edge thereof and angled toward the plane of the associated strap (24).

7. A spacer grid according to claim 6, characterized in that each dimple (46) extends transverse with respect to the longitudinal axis of the associated cell (34).

8. A spacer grid according to claim 3, 4, 5, 6 or 7, characterized in that each dimple (46) includes base portions (72) extending from opposite ends of the raised central portion thereof and each having a longitudinal rib (76) formed thereon.

**Patentansprüche**

1. Kernbrennstab-Haltegitter zur seitlichen Abstützung der im wesentlichen parallelen, mit Abstand verlaufenden und im wesentlichen zylindrischen Brennstäbe in einem Kernbrennelement, mit einer Mehrzahl von in eierkistenartiger Anordnung ineinandergreifenden Streifen zur Bildung von Brennstäbe aufnehmenden Zellen, die jeweils von Abschnitten der genannten Gitterstreifen mit daran gebildeten Noppen und mit diesen gegenüberliegend angeordneten Federn zum Vorspannen eines hindurchverlaufenden Brennstabs gegen die Noppen begrenzt sind, wobei jeder Noppen (46) und jede Feder (48) eine an der Umfangsfläche des Brennstabs (18) anliegende Anlagefläche (70; 56) aufweist, dadurch gekennzeichnet, daß die Anlagefläche (70; 56) jedes der Noppen und jeder der Federn etwa teilzylindrisch und so konturiert ist, daß sie den Brennstab umgreift.

2. Haltegitter nach Anspruch 1, dadurch gekennzeichnet, daß die konturierte Anlagefläche (56; 70) jedes Noppens (46) und jeder Feder (48) mit einem Krümmungsradius gekrümmt ist, der mindestens gleich dem Krümmungsradius der Umfangsfläche des betreffenden Brennstabs ist.

3. Haltegitter nach Anspruch 1 oder 2, dadurch gekennzeichnet, daß jede der Federn (48) und jeder der Noppen (46) ein längliches Element ist, das von dem zugehörigen Streifen (24) in die betreffende Zelle (34) hinein ausgebogen ist und einen erhabenen Mittelteil mit der daran gebildeten konturierten Anlagefläche (56; 70) aufweist.

4. Haltegitter nach Anspruch 3, dadurch gekennzeichnet, daß jede Feder (48) im wesentlichen parallel zur Längsachse der zugehörigen Zelle (34) verläuft und Basisteile (60, 62) aufweist, die von entgegengesetzten Enden des erhabenen Mittelteils der Feder wegragen und jeweils eine darauf gebildete Längsrippe (58) aufweisen.

5. Haltegitter nach Anspruch 3 oder 4, dadurch gekennzeichnet, daß jede Feder (48) entlang ihrer Längsränder gebildete Flansche (64) aufweist, die bewzüglich der Ebene des zugehörigen Streifens (24) abgewinkelt sind.

6. Haltegitter nach Anspruch 3, 4 oder 5, dadurch gekennzeichnet, daß jeder der Noppen (46) entlang seiner Längsränder gebildete Flansche (74) aufweist, die zur Ebene des zugehörigen Streifens (24) hin abgewinkelt sind.

7. Haltegitter nach Anspruch 6, dadurch gekennzeichnet, daß jeder Noppen (46) quer mit Bezug auf die Längsachse der betreffenden Zelle (34) verläuft.

8. Haltegitter nach Anspruch 3, 4, 5, 6 oder 7, dadurch gekennzeichnet, daß jeder Noppen (46) Basisteile (72) aufweist, die von entgegengesetzten Enden des erhabenen Mittelteils aus verlaufen und jeweils eine daran gebildete Längsrippe (76) aufweisen.

**Revendications**

1. Grille de séparation de barres de combustible nucléaire pour supporter latéralement les barres de combustible sensiblement cylindriques et espacées de façon sensiblement parallèle dans un assemblage combustible nucléaire, et comprenant une pluralité de bandes intercalées à la manière d'une boîte à oeufs pour définir des cellules destinées à recevoir les barres combustibles, chacune de ces cellules étant rattachée à des parties desdites bandes et ayant formé sur celles-ci des cavités et, du côté opposé à ces dernières, des ressorts poussant contre les cavités une barre combustible s'étendant le long de ces cellules, chacune desdites cavités (46) et chacun desdits ressorts (48) ayant une surface (70; 56) qui porte contre la surface périphérique de la barre combustible (18), caractérisée par le fait que lesdites surfaces (70; 56) de chacune desdites cavités et chacun desdits ressorts sont sensiblement partiellement cylindriques et ont un profil de façon à entourer la barre combustible.

2. Grille de séparation selon la revendication 1, caractérisée par le fait que la surface profilée (56; 70) de chaque cavité (46) et de chaque ressort (48) est courbée et a un rayon de courbure au moins égal au rayon de courbure de la surface périphérique de la barre combustible correspondante.

3. Grille de séparation selon les revendications 1 ou 2, caractérisée par le fait que chacun desdits ressorts (48) et chacune desdites cavités (46) sont constitués d'un élément allongé argué par rapport à la bande associée (24) vers l'intérieur de la cellule associée (34) et ayant une partie centrale surélevée, ladite surface profilée (56; 70) étant formée à cet endroit.

4. Grille de séparation selon la revendication 3, caractérisée par le fait que chaque ressort (48) s'étend sensiblement parallèlement à l'axe longitudinal de la cellule associée (34) et comporte des bases (60, 62) qui s'étendent depuis les extrémités opposées de ladite partie centrale surélevée du ressort, et sur chacune desquelles est formée une nervure longitudinale (58).

5. Grille de séparation selon les revendications 3 ou 4, caractérisée par le fait que chaque ressort (48) a des ailes (64) formées le long de ses bords longitudinaux de ce ressort, et orientées vers le plan de la bande associée (24).

6. Grille de séparation selon les revendications 3, 4 ou 5, caractérisée par le fait que chacune desdits cavités (46) a des ailes (74) formées le long de son bord longitudinal de cette cavité, et orientées vers le plan de la bande associée (24).

7. Grille de séparation selon la revendication 6, caractérisée par le fait que chaque cavité (46) s'étend transversalement par rapport à l'axe longitudinal de la cellule associée (34).

8. Grille de séparation selon les revendications 3, 4, 5, 6 ou 7, caractérisée par le fait chaque cavité (46) comporte des parties de base (72) s'étendant depuis les extrémités opposées de sa partie centrale surélevée, et sur chacune desquelles est formée une nervure longitudinale (76).

FIG.1

FIG.3

FIG.4

Fig.2

Fig.5

Fig.6

_Fig.1_

_Fig.8_

_Fig.9_

_Fig.10_

_Fig.11_